# EUROPEAN PATENT SPECIFICATION

(11) **EP 2 955 037 B1**
(45) Date of publication and mention of the grant of the patent: **11.07.2018**
(21) Application number: 14748611.2
(22) Date of filing: 06.02.2014
(51) Int. Cl.: B60C 11/16, B60C 11/04, B60C 11/03, B60C 11/12

(54) **STUDDABLE TIRE**
MIT SPIKES BESTÜCKBARER REIFEN
PNEU CLOUTABLE

(30) Priority: 07.02.2013 JP 2013022207
(43) Date of publication of application: 16.12.2015
(73) Proprietor: Bridgestone Corporation, Tokyo 104-8340 (JP)
(72) Inventor: ITO Tomoaki, Kodaira-shi Tokyo 187-8531 (JP); WATANABE Yuki, Kodaira-shi Tokyo 187-8531 (JP)
(74) Representative: Oxley, Robin John George
(86) International application number: PCT/JP2014/052731
(87) International publication number: WO 2014/123181

(56) References cited:
- EP-A1- 2 285 599
- EP-A1- 2 285 600
- WO-A1-2011/057834
- JP-A- 2008 230 259
- JP-A- 2011 521 844
- JP-A- 2011 521 845
- KR-A- 20110 066 417

## Description

### TECHNICAL FIELD

The present invention relates to a studdable tire having a tire tread formed with a plurality of stud holes into which spike pins are inserted.

### BACKGROUND ART

The studdable tire has been conventionally known as a winter tire having metallic studs (spike pins) driven into the land portions of the tread. As a vehicle fitted with these studdable tires runs on an ICE road surface, the tips of the studs dig into the road surface, thereby increasing the friction between the road surface and the tires. And this will ensure the steering stability performance on the ICE road surface.

Also, there has been proposed, for winter tires, a method of alleviating external forces acting on spike pins, by providing, a slit of 3 to 7.5 mm in depth in such a way as to surround a stud hole on both sides or one side in the tire width direction to make the spike pins move together with the surrounding rubber so as to improve the anti-detachment property (see Patent Document 1, for instance).

Reference is also made to WO 2011/057834 which discloses a tread profile of a pneumatic vehicle tire. In particular, this document discloses a studdable tire according to the preamble of claim 1.

### RELATED ART DOCUMENT

### PATENT DOCUMENT

Patent Document 1: Japanese Unexamined Patent Application Publication No. 2008-230259

### SUMMARY OF THE INVENTION

### PROBLEMS TO BE SOLVED BY THE INVENTION

As it is widely known, when a vehicle fitted with studdable tires runs on an ICE road surface, there occurs a phenomenon of ice powder having been dug up by the spike pins adhering to the peripheries of the spike pins. And if the ice powder adheres to the peripheries of the spike pins, the steering stability performance of the tires on ICE road surfaces may decline because penetration of the spike pins into the ice is hindered.

The slits as disclosed in Patent Document 1 reduce the external forces acting on the spike pins by opening and closing. Therefore, they can improve the anti-detachment property of the spike pins, but were not able to inhibit the adhesion of ice powder to the spike pins.

Also, as far as the present inventors know, there have been no effective technologies proposed for inhibiting the adhesion of ice powder to the spike pins.

The present invention has been made in view of these conventional problems, and an object thereof is to provide a studdable tire ensuring a high steering stability performance by restraining adhesion of the ice powder occurring during vehicular travel on an ICE road surface to the spike pins.

### MEANS FOR SOLVING THE PROBLEM

The present invention provides a studdable tire including a tire tread having circumferential grooves extending in a tire circumferential direction, lug grooves extending in a direction intersecting the circumferential grooves, land portions defined by the circumferential grooves and the lug grooves, stud holes formed in the land portions, in which the tire includes intra-land grooves, each having both ends thereof terminating within the land portion, the intra-land grooves being formed on each of a step-in side and a kick-out side of the land portion within a region enclosed by two circles of different radii having a center concentrical to a center of the stud hole on a land surface, and communicating grooves communicating the intra-land grooves with the lug grooves, characterised in that the tire has a directional pattern and the communicating grooves are formed only for intra-land grooves formed on the step-in side among the intra-land grooves.

A preferred embodiment of the invention is defined in appended claim 2.

### BRIEF DESCRIPTION OF THE DRAWINGS

FIG. 1 is an illustration showing an example of tread pattern of a studdable tire according to an embodiment of the present invention.
FIGs. 2 (a) and 2 (b) are illustrations showing a region with low ground contact pressure around a spike pin.
FIG. 3 is an illustration showing an arrangement of a group of ice-removal grooves disposed in a shoulder block.
FIGs. 4(a) to 4(c) are illustrations showing shapes of the first to third grooves.
FIG. 5 is an illustration showing an arrangement of a group of ice-removal grooves disposed in an inner block.
FIGs. 6(a) and 6(b) are illustrations showing ice-removal grooves disposed on a non-directional tire.

### MODE FOR CARRYING OUT THE INVENTION

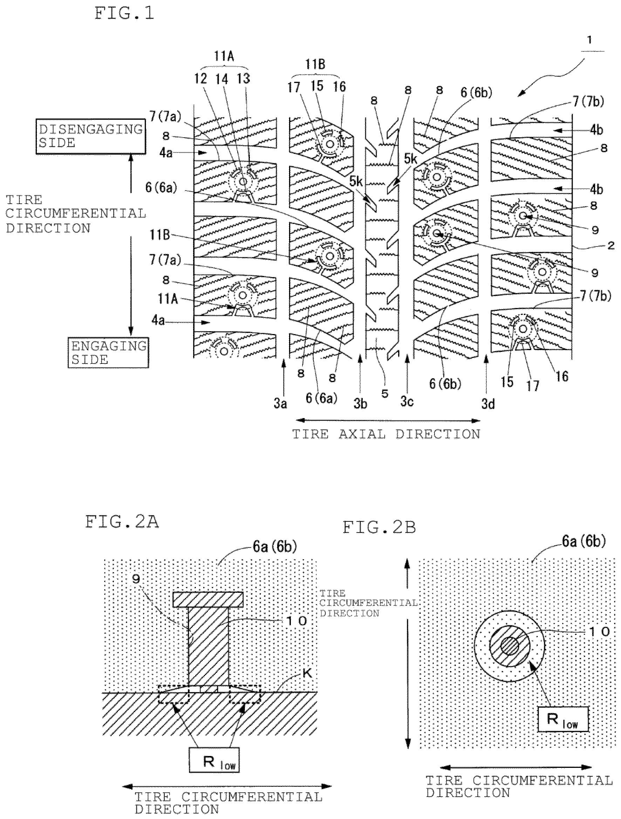

FIG. 1 is an illustration showing a tread pattern of a studdable tire 1 according to an embodiment of the present invention. In this embodiment, as the studdable tire 1, a tire having a directional pattern (a tire with a designated direction of rotation to be fitted on a vehicle in such a manner that the direction of rotation is consistent with the direction of vehicular advance) . In the figure, the vertical direction is the circumferential direction of the tire, and the horizontal direction the tire width direction. Also, the lower side is the step-in side, and the upper side the kick-out side when the tire is rotating forward.

Formed on a surface of the tread 2 of the studdable tire 1 are circumferential grooves 3a to 3d extending in a direction parallel to the circumferential direction of the tire, left-hand lug grooves 4a extending in an arc from upper left to lower right and intersecting the circumferential grooves 3a and 3b, and right-hand lug grooves 4b extending in an arc from upper right to lower left and intersecting the circumferential grooves 3c and 3d.

A central land section 5 is defined by two circumferential grooves (hereinafter referred to as main grooves) 3b, 3c located on the inner side in the tire width direction. Disposed in the main groove 3b side and the main groove 3c side of the central land section 5 are unilaterally open grooves 5k extending in a direction intersecting the main grooves 3b, 3c, respectively, one end of which opens on the main grooves 3b, 3c, respectively, and the other end of which terminates within the central land section.

First inner blocks 6a are defined by the main groove 3b, the circumferential groove (hereinafter referred to as a shoulder groove) 3a located on the outer side in the tire width direction, and the left-hand lug grooves 4a, and second inner blocks 6b are defined by the main groove 3c, the shoulder groove 3d and the right-hand lug grooves 4b. Left-hand shoulder blocks 7a are defined by the shoulder groove 3a and the left-hand lug grooves 4a, and right-hand shoulder blocks 7b are defined by the shoulder groove 3d and the right-hand lug grooves 4b.

In this embodiment, the left-hand lug grooves 4a and the right-hand lug grooves 4b as well as the left-hand blocks 6a, 7a and the right-hand blocks 6b, 7b have almost identical behavior (function). Hereinafter, therefore, the lug grooves 4a, 4b are referred to as the lug grooves 4, the inner blocks 6a, 6b as the inner blocks 6, and the shoulder blocks 7a, 7b as the shoulder blocks 7.

Formed on the tread surface side of the central land section 5, the inner blocks 6, and the shoulder blocks 7 are a plurality of sipes 8 extending in directions intersecting the circumferential direction of the tire. And formed in portions without the sipes 8 in the inner blocks 6 and the shoulder blocks 7 are stud holes 9 into which not-shown s spike pins are inserted.

When a vehicle with tires fitted with spike pins 10 is driven on an ICE road surface K, a ring-shaped region R_{low}, as shown in FIGs. 2(a) and 2(b), which barely comes in contact with the ICE road surface K because of low ground contact pressure, is created around the spike pin 10.

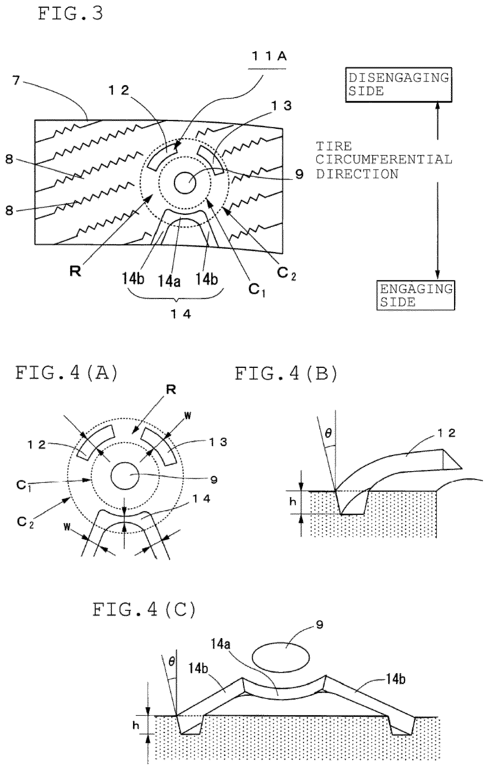

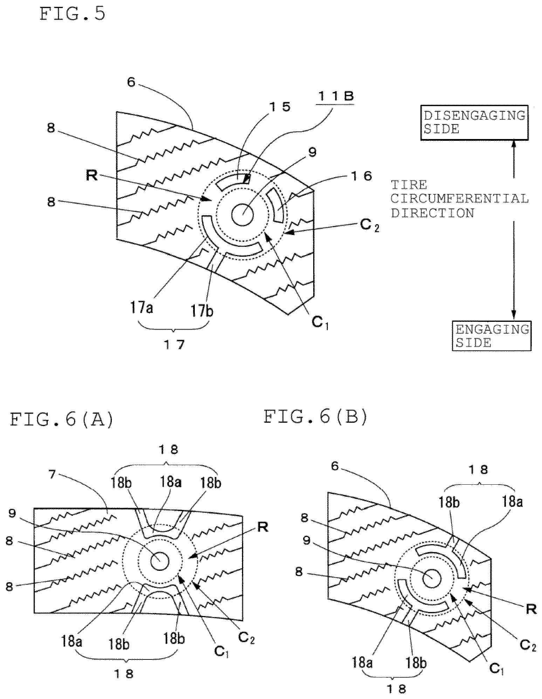

In the present embodiment, as shown in FIG. 3 and FIG. 5, when the spike pin 10 is fitted into a stud hole 9, a group of ice-removal grooves 11A or a group of ice-removal grooves 11B, formed by a plurality of grooves, for removing ice powder occurring during the vehicle's travel on an ICE road surface out of the studdable tire 1, are disposed in the ring-shaped region R_{low}, that is, the region R enclosed by two circles C₁ and C₂ of different radii having a center concentrical to the center of the stud hole 9. This arrangement restrains adhesion of the ice powder occurring during the vehicle's travel on an ICE road surface to the spike pin 10. Note that the ice-removal grooves 11A are a group of ice-removal grooves disposed in the shoulder block 7, whereas the ice-removal grooves 11B are a group of ice-removal grooves disposed in the inner block 6.

It is to be noted that the radii r₁ and r₂ of the circles C₁ and C₂ depend on the radius of the stud hole 9 formed in the inner block 6 and the shoulder block 7, respectively. For example, when the radius of the middle part of the stud hole 9 is 2 mm, it is preferable that r₁ = 4 mm and r₂ = 6 mm or thereabout.

As shown in FIG. 3, the ice-removal grooves 11A includes the first to third grooves 12 to 14 disposed in such a manner that they are spaced apart from each other in the region R of the shoulder block 7.

The first and second grooves 12, 13 are both arc-shaped grooves in plan view, both ends of which terminate within the shoulder block 7 (intra-land groove), and are disposed on the kick-out side of the region R.

The third groove 14 includes an intra-land groove portion 14a arc-shaped in plan view, both ends of which terminate within the shoulder block 7, and two communicating groove portions 14b which communicate both end portions of the intra-land groove portion 14a with the lug groove 4 located on the step-in side of the shoulder block 7.

In the present embodiment, the communicating groove portions 14b are arranged on straight lines extending from the center of the arc constituting the intra-land groove portion 14a and passing through both ends of the arc.

The first and second grooves 12, 13 are formed in positions symmetrical with respect to the straight line passing through the central portion of the third groove 14 and perpendicular to the lug groove 4.

In doing so, it is preferable to set the radius r₁ of the inner circle C₁ such that the difference between the inner peripheral edges of the first and second grooves 12, 13 and the intra-land groove portion 14a and the outer peripheral edge of the stud hole 9 is about 0.5 to 1.5 mm. This is because too narrow an interval between the first and second grooves 12, 13 and the intra-land groove portion 14a and the stud hole 9 tends to cause the ice powder to remain around the spike pins.

Conversely, any attempt at widening the interval between the first and second grooves 12, 13 and the intra-land groove portion 14a and the stud hole 9 may result in a failure to locate the first and second grooves 12, 13 and the intra-land groove portion 14a within the ring-shaped region R_{low} unless the groove widths of the first and second grooves 12, 13 and the intra-land groove portion 14a are narrowed.

It is to be noted that the radius r₂ of the outer circle C₂ is acceptable if it is equal to or less than the radius of the outer circle of the ring-shaped region R_{low} that is made when the stud 10 is fitted. However, it is preferable that the radius r₂ of the circle C₂ is large enough to secure sufficient groove widths of the first and second grooves 12, 13 and the intra-land groove portion 14a.

Also, to make the removal of ice powder easier, a groove may be added between the first groove 12 and the second groove 13, or otherwise the first groove 12 and the second groove 13 may be communicated with each other, thereby forming an arc-shaped groove. However, if the rigidity of the shoulder blocks 7 is to be retained, it is preferable that no groove is placed between the first groove 12 and the second groove 13 as in the present embodiment.

Also, if the intra-land groove portion 14a of the third groove 14 is divided into two arc-shaped grooves separate from each other, the rigidity of the shoulder blocks 7 can be raised. However, to achieve an effective removal of ice powder at the time of braking (locking), it is preferable that the intra-land groove portion 14a is shaped as a single arc-shaped groove as in the present embodiment.

Also, as shown in FIGs. 4(a) to 4(c), it is preferable that the groove width w of the first to third grooves 12 to 14 is 1.0 mm or more and not more than the difference (r₂ - r₁) between the radius r₁ of the circle C₁ and the radius r₂ of the circle C₂, which is the upper limit of the groove width w. Also, the groove depth h is preferably within a range of 0.2 mm to 1.5 mm, and the groove angle *θ* within a range of 0 to 45 degrees. Note that the groove angle *θ* is the angle formed between the straight line perpendicular to the tire tread surface and the groove walls of the grooves 12 to 14, as shown in FIGs. 4(a) to 4(c).

If the groove width w is less than 1.0 mm, ice powder cannot be discharged out of the tire thoroughly because the passage for removal of the ice powder dug up by the spike pins is narrow. Therefore the groove width w is preferably 1.0 mm or more. Also, if the groove width w exceeds the upper limit, then the region where the first and second grooves 12, 13 and the intra-land groove portion 14a exist will extend outside the region R. This may result in a reduced rigidity of the shoulder blocks 7 as described above.

It is to be noted that when the width of the region R is r₂ - r₁ ≧ 3 mm, the upper limit value of the groove width w should preferably be set at 3 mm. This is because the groove width w in excess of 3 mm will reduce the rigidity around the spike pin, thus narrowing the ring-shaped region R_{low}. And, as a result, the region where the first and second grooves 12, 13 and the intra-land groove portion 14a exist may possibly extend outside the region R.

If the groove depth h is less than 0.2 mm, ice powder cannot be discharged out of the tire thoroughly because the groove width is too narrow to allow smooth movement of ice powder. On the other hand, if the groove depth h is in excess of 1.5 mm, the ice powder can collect in the groove bottom with the result that the efficiency in the removal of ice powder drops. Therefore, it is preferable that the groove depth h is within a range of 0.2 mm to 1.5 mm.

Also, the groove angle *θ* should preferably be 45 degrees or less. This is because the groove angle *θ* in excess of 45° makes the groove depth shallower and reduces the groove volume to a half or less of that when *θ* = 0° (the wall surface being vertical). And this in turn makes it impossible to discharge the ice power out of the tire thoroughly.

As shown in FIG. 5, the ice-removal grooves 11B include the fourth to sixth grooves 15 to 17 disposed in such a manner that they are spaced apart from each other in the region R of the inner block 6.

The fourth and fifth grooves 15, 16 are both arc-shaped grooves in plan view similar to the first and second grooves 12, 13, both ends of which terminate within the inner block 6, and are disposed on the kick-out side of the region R.

The sixth groove 17 includes an intra-land groove portion 17a arc-shaped in plan view, both ends of which terminate within the shoulder block 7, and a communicating groove portion 17b which communicates the midportion of the intra-land groove portion 17a with the lug groove 4 located on the step-in side of the inner block 6. In the present embodiment, the communicating groove portion 17b is arranged on a straight line passing through the center of the arc forming the intra-land groove portion 14a and the center of the arc.

The fourth and fifth grooves 15, 16 are formed in positions symmetrical with respect to the straight line passing through the midportion of the sixth groove 17 and perpendicular to the lug groove 4.

The range of groove width w, the range of groove depth h thereof, and the range of groove angle *θ* of the fourth to sixth grooves 15 to 17 disposed in the inner block 6 are the same as the range of groove width w, the range of groove depth h, and the range of groove angle *θ* of the first to third grooves 12 to 14 disposed in the shoulder block 7.

However, the groove width w, the groove depth h, and the groove angle *θ* of the fourth to sixth grooves 15 to 17 disposed in the inner block 6 may be different from the groove width w, the groove depth h thereof, and the groove angle *θ* of the first to third grooves 12 to 14 disposed in the shoulder block 7, respectively.

Now, a description is given of the action of the ice-removal grooves 11A disposed in the shoulder blocks 7.

When the tires fitted with spike pins in the stud holes 9 run on the ICE road surface K, ice powder occurs as the ICE road surface K is dug up by the spike pins. If the ice-removal grooves 11A are not formed, the occurred ice powder will remain within the region R_{low} around the spike pin as shown in FIG. 2 with the result that the ice powder adheres to the periphery of the spike pin.

In the present embodiment, the first to third grooves 12 to 14 are disposed on the step-in side and kick-out side of the region R of the shoulder block 7, which becomes the region R_{low} after the fitting of the spike pins. Accordingly, the ice powder dug up by the spike pin is moved away from the spike pin and collected within the first and second grooves 12, 13 and the intra-land groove portion 14a of the third groove 14. Hence, it is possible to inhibit the ice powder from remaining around the spike pin and sticking to the spike pin. This will improve the performance of the studdable tire 1 on ICE road surfaces.

Also, the first and second grooves 12, 13 and the intra-land groove portion 14a of the third groove 14 are disposed in positions that barely come in contact with the road surface. Therefore, adhesion of ice powder to the spike pins can be inhibited reliably without reducing the ground contact area of the shoulder blocks 7.

It should be noted that the ice powder collected in the first and second grooves 12, 13 is discharged from within the first and second grooves 12, 13 directly to the outside of the tire as the studdable tire 1 rolls. And the ice powder collected in the intra-land groove portion 14a is discharged out of the tire directly or through the communicating groove portions 14b.

On the other hand, at the time of braking (locking) the tires, the ice powder occurs mostly on the step-in side. But the occurred ice powder is first collected within the intra-land groove portion 14a of the third groove 14 disposed on the step-in side and then led into the lug groove 4 through the communicating groove portions 14b, and discharged out of the tire from the lug groove 4 and the shoulder groove 3a (or the shoulder groove 3d).

With the third groove 14 having the communicating groove portions 14b communicating to the lug groove 4 disposed on the step-in side of the shoulder block 7 like this, the adhesion of ice powder to the spike pins can be effectively inhibited at the time of braking (locking). Therefore, the braking performance of the tire can be enhanced.

The action of the fourth to sixth grooves 15 to 17 of the ice-removal grooves 11B disposed in the inner blocks 6 is the same as that of the first to third grooves 12 to 14 of the ice-removal grooves 11A, and so a repeated explanation thereof is omitted.

Thus, in the present embodiment, the first and second grooves 12, 13 and the intra-land groove portion 14a as the intra-land grooves are disposed on the step-in side and kick-out side within the region R, which barely comes in contact with the ICE road surface K, on the shoulder block 7 defined by the shoulder groove 3a and the lug groove 4a or by the shoulder groove 3d and the lug groove 4b. And this arrangement leads the ice powder occurring during vehicular travel on the ICE road surface into the intra-land grooves. As a result, the adhesion of ice powder to the spike pin 10 can be reliably inhibited without reducing the ground contact area substantively. This allows the spike pin 10 to penetrate the ice without fail, thus ensuring the steering stability performance of the tire on the ICE road surface.

Also, two communicating groove portions 14b are formed to communicate both end portions of the intra-land groove portion 14a with the lug groove 4 positioned on the step-in side of the shoulder block 7. Therefore, at the time of braking (locking) in BS control, the ice powder can be effectively discharged from the communicating grooves to the lug groove, thus enhancing the braking performance of the tire on the ICE road surface.

Also, on the inner block 6 defined by the main groove 3b, the shoulder groove 3a and the lug grooves 4a, or by the main groove 3c, the shoulder groove 3d and the lug grooves 4b, the fourth and fifth grooves 15, 16 and the intra-land groove portion 17a as the intra-land grooves are disposed on the step-in side and kick-out side in the region R. At the same time, a communicating groove portion 17b is formed to communicate the midportion of the intra-land groove portion 17a with the lug groove 4 positioned on the step-in side of the inner block. Therefore, the ice powder can be effectively removed into the lug groove while retaining the rigidity of the block.

In the foregoing, the invention has been described with reference to specific embodiments thereof. However, the technical scope of this invention is not to be considered as limited to those embodiments . It will be evident to those skilled in the art that various modifications and changes may be made thereto without departing from the scope of the invention. It will also be evident from the scope of the appended claims that all such modifications are intended to be included within the technical scope of this invention.

It is to be noted that in the foregoing embodiment, a description has been given of the studdable tire 1 having a tread pattern with the central land section 5, the inner blocks 6, and the shoulder blocks 7, but this is not a limitation. The present invention may also be applicable to studdable tires having other tread patterns such as one with a series of blocks in the central land section 5.

Also, in the foregoing embodiment, the groove depth of the first to sixth grooves 12 to 17 is fixed. But the groove depth may be made gradually shallower from the stud hole 9 side to the lug groove 4 side. By doing so, the ice powder can be expelled even more easily out of the tire.

Also, in the foregoing embodiment, the first and second grooves 12, 13 (or the fourth and fifth grooves 15, 16) are formed in positions symmetrical with respect to the straight line passing through the central portion of the third groove 14 (or the sixth groove 17) and perpendicular to the lug groove 4. However, the extension direction of the third groove 14 (or the sixth groove 17) may be set in the circumferential direction of the tire, and the first and second grooves 12, 13 (or the fourth and fifth grooves 15, 16) are formed in positions symmetrical with respect to a straight line parallel to the circumferential direction of the tire.

Also, the extension direction of the third groove 14 (or the sixth groove 17) only may be set in the circumferential direction of the tire. When the extension direction of the third groove 14 (or the sixth groove 17) only is set in the circumferential direction of the tire, the groove length will be longer. As a result, the rigidity of the blocks may drop a little, but the ice powder can be expelled even more effectively into the lug groove 4.

### Example

Studdable tires (present invention) having a group of ice-removal grooves disposed around each stud hole as shown in FIG. 1 and studdable tires (conventional type) without the group of ice-removal grooves were prepared. An investigation was made regarding the braking performance of the test vehicles fitted with tires having spike pins driven into the stud holes. The results are shown in Table 1.

The tire size of the studdable tires used in the test was 205/55R16, and the number of stud holes per tire was 96 each.

The braking performance was evaluated by measuring the time (braking time) from sudden braking to a complete stop of the test vehicle running at a constant speed of 20 km/h on an ICE road surface and indexing the inverse number of the braking time. The braking performance index (INDEX) in Table 1 is relative to 100, which represents the braking time of the Conventional Type studdable tire. The larger the value, the shorter the braking time and hence the better the braking performance is.

Also, the braking test was repeated five times, and the variation in braking time (standard deviation σ) was also investigated. The smaller the value of σ, the smaller the variation in the braking time.

**[Table 1]**

| | Conventional Type | Present Invention |
|---|---|---|
| INDEX | 100 | 108 |
| N5 σ (sec) | 0.182 | 0.107 |

As is evident from Table 1, the tire according to the present invention shows better braking performance and smaller variation in braking time than the conventional type tire. Therefore, it has been confirmed that the adhesion of ice powder occurring during vehicular travel to the spike pins can be effectively inhibited by disposing a group of ice-removal grooves around each stud hole as shown in FIG. 1.

### INDUSTRIAL APPLICABILITY

As described thus for, the present invention can provide a studdable tire excelling in steering stability performance by effectively inhibiting the adhesion of ice powder occurring during vehicular travel on ICE road surfaces to the spike pins.

### Description of Reference Numerals

- 1: studdable tire
- 2: tread
- 3a-3d: circumferential groove
- 4, 4a, 4b: lug groove
- 5: central land section
- 6, 6a, 6b: inner block
- 7, 7a, 7b: shoulder block
- 8: sipe
- 9: stud hole
- 10: spike pin
- 11A, 11B: ice-removal grooves
- 12-17: first to sixth grooves
- 14a, 17a: intra-land groove portions
- 14b, 17b: communicating groove portions
- K: ICE road surface

## Claims

1. A studdable tire (1) comprising a tire tread (2) having circumferential grooves (3a-3d) extending in a tire circumferential direction, lug grooves (4, 4a, 4b) extending in a direction intersecting the circumferential grooves (3a-3d), land portions defined by the circumferential grooves (3a-3d) and the lug grooves (4, 4a, 4b), and stud holes (9) formed in the land portions,
wherein the tire (1) includes intra-land grooves (14a, 17a), each of both ends thereof terminating within the land portion, the intra-land grooves (14a, 17a) being formed on each of a step-in side and a kick-out side of the land portion within a region enclosed by two circles of different radii each having a center concentrical to a center of the stud hole (9) on a surface of the land portion, and communicating grooves (14b, 17b) communicating the intra-land grooves (14a, 17a) with the lug grooves (4, 4a, 4b),
**characterised in that** the tire (1) has a directional pattern and the communicating grooves (14b, 17b) are formed only for intra-land grooves (14a, 17a) formed on the step-in side among the intra-land grooves (14a, 17a).

2. The studdable tire (1) according to claim 1, wherein the communicating groove (14b, 17b) is formed at each end of the intra-land groove (14a, 17a) in a case where the land portions having the stud holes (9) are shoulder land portions provided in a shoulder portion of the tire (1), and the communicating groove (14b, 17b) is formed in a mid portion in a width direction of the intra-land groove (14a, 17a) in a case where the land portions having the stud holes (9) are land portions located inside in a tire width direction of the shoulder portion.

## Patentansprüche

1. Mit Spikes bestückbarer Reifen (1), der eine Reifenlauffläche (2) umfasst, die umlaufende Rillen (3a-3d), die sich in einer Reifenumfangsrichtung erstrecken, Stollenrillen (4, 4a, 4b) die sich in einer Richtung erstrecken, welche die umlaufenden Rillen (3a-3d) schneidet, Stegabschnitte, die durch die umlaufenden Rillen (3a-3d) und die Stollenrillen (4, 4a, 4b) definiert werden, und Spikeslöcher (9), die in den Stegabschnitten geformt sind, hat,
wobei der Reifen (1) Innerstegrillen (14a, 17a), deren beide Enden innerhalb des Stegabschnitts enden, wobei die Innerstegrillen (14a, 17a) sowohl auf einer Eintrittsseite als auch auf einer Austrittsseite des Stegabschnitts innerhalb eines Bereich geformt sind, der durch zwei Kreise umschlossen wird, die unterschiedlichen Radien haben, wobei sie jeweils einen Mittelpunkt, konzentrisch zu einem Mittelpunkt des Spikeslochs (9) auf einer Oberfläche des Stegabschnitts haben, und Verbindungsrillen (14b, 17b), welche die Innerstegrillen (14a, 17a) mit den Stollenrillen (4, 4a, 4b) verbinden, einschließt,
**dadurch gekennzeichnet, dass** der Reifen (1) ein Richtungsmuster hat und die Verbindungsrillen (14b, 17b) nur für Innerstegrillen (14a, 17a) geformt sind, die unter den Innerstegrillen (14a, 17a) auf der Eintrittsseite geformt sind.

2. Mit Spikes bestückbarer Reifen (1) nach Anspruch 1, wobei in einem Fall, in dem die Stegabschnitte, welche die Spikeslöcher (9) haben, Schulterstegabschnitte sind, die in einem Schulterabschnitt des Reifens (1) bereitgestellt sind, die Verbindungsrille (14b, 17b) an jedem Ende der Innerstegrille (14a, 17a) geformt ist, und in einem Fall, in dem die Stegabschnitte, welche die Spikeslöcher (9) haben, Stegabschnitte sind, die in einer Reifenbreitenrichtung von dem Schulterabschnitt nach innen angeordnet sind, die Verbindungsrille (14b, 17b) in einer Breitenrichtung in einem Mittelabschnitt der Innerstegrille (14a, 17a) geformt ist.

## Revendications

1. Pneu pouvant être équipé de clous (1), comprenant une bande de roulement de pneu (2) présentant des rainures circonférentielles (3a à 3d) s'étendant dans une direction circonférentielle de pneu, des rainures en barrette (4, 4a, 4b) s'étendant dans une direction intersectant les rainures circonférentielles (3a à 3d), des parties appui définies par les rainures circonférentielles (3a à 3d) et par les rainures en barrette (4, 4a, 4b), et des trous pour clou (9) formés dans les parties appui,
dans lequel le pneu (1) comprend des rainures intra-appui (14a, 17a), chacune des deux extrémités de celles-ci aboutissant au sein de la partie appui, les rainures intra-appui (14a, 17a) étant formées sur respectivement un côté parmi un côté d'entrée et un côté de sortie de la partie appui au sein d'une région entourée par deux cercles de rayons différents présentant respectivement un centre concentrique par rapport à un centre du trou pour clou (9) sur une surface de la partie appui, et des rainures de communication (14b, 17b) faisant communiquer les rainures intra-appui (14a, 17a) avec les rainures en barrette (4, 4a, 4b),
**caractérisé en ce que** le pneu (1) présente un motif directionnel et les rainures de communication (14b, 17b) sont formées seulement pour celles des rainures intra-appui (14a, 17a), parmi les rainures intra-appui (14a, 17a), qui sont formées sur le côté d'entrée.

2. Pneu pouvant être équipé de clous (1) selon la revendication 1, dans lequel la rainure de communication (14b, 17b) est formée au niveau de chaque extrémité de la rainure intra-appui (14a, 17a) dans le cas où les parties appui présentant les trous pour clou (9) sont des parties appui d'épaulement fournies dans une partie épaulement du pneu (1), et la rainure de communication (14b, 17b) est formée dans une partie médiane, dans une direction de largeur de la rainure intra-appui (14a, 17a), dans le cas où les parties appui présentant les trous pour clou (9) sont des parties appui situées à l'intérieur, dans une direction de largeur de pneu, de la partie épaulement.
